# EUROPÄISCHE PATENTANMELDUNG

(11) **EP 2 011 380 A2**
(43) Veröffentlichungstag der Anmeldung: **07.01.2009**
(21) Anmeldenummer: 08011792.2
(22) Anmeldetag: 30.06.2008
(51) Int. Cl.: A01B 39/16

(54) **Umkehrfräse zur Bodenbearbeitung**

(30) Priorität: 04.07.2007 DE 102007031106; 04.07.2007 DE 102007031105
(71) Anmelder: agria-Werke GmbH, 74219 Möckmühl (DE)
(72) Erfinder: Mugrauer, Armin, 74632 Neuenstein (DE); Beerbaum, Maik, 74210 Möckmühl (DE)
(74) Vertreter: Feldkamp, Rainer

(57) **Zusammenfassung**

Die Erfindung betrifft eine Umkehrfräse, insbesondere als Anbaugerät an einem selbstfahrenden Einachsschlepper, die in Fahrtrichtung hintereinander ein Fräsgehäuse mit einer entgegen der Fahrtrichtung rotierenden mit Fräsmessern ausgerüsteten Fräswalze, eine das Fräsgehäuse nach hinten abschließende Siebgitteranordnung und dahinter eine Planierwalze aufweist, wobei durch ein Verstellgetriebe der Bodenabstand des Fräsgehäuses und damit die Eindringtiefe der Fräsmesser einstellbar ist, wobei das Verstellgetriebe durch einen wahlweise betätigbaren Schnellschaltmechanismus überbrückbar ist, um einen möglichst schnellen Übergang von der Arbeitsstellung in die Transportstellung zu ermöglichen, in der die Fräsmesser über dem Boden angehoben sind. Der Schnellschaltmechanismus weist dabei ein Stellglied auf, über das das Verstellgetriebe seinerseits im Sinne einer Höhenverstellung verschiebbar ist. Das Stellglied ist als Schalthebel ausgebildet, der einerseits am Fräsgehäuse und andererseits am Verstellgetriebe angelenkt ist. Weiter sind bei der Umkehrfräse Mittel vorgesehen, um ohne Lageänderung des Gerätes die Siebgitteranordnung aus ihrer Arbeitsstellung in eine Freigabestellung zu überführen, in der die Fräswalze mit ihren Fräsmessern frei zugänglich ist und die Mittel ein Klappgelenk aufweisen, über das die aus Siebgitter und Rückwand bestehende Siebgitteranordnung nach oben ausschwenkbar ist.

## Beschreibung

Zur Bodenbearbeitung werden allgemein Fräsen als Anbaugerät an einem selbstfahrenden Einachsschlepper montiert oder in die Dreipunktaufhängung eines Traktors gehängt und von dessen Motor mittels einer Zapfwelle angetrieben. Bei einer solchen Fräse, die als Bodenzerkrümelungsgerät ausgebildet ist, rotieren die am äußeren Ende der Fräse angeordneten Messer in Fahrtrichtung um eine waagerechte Welle. Bei einer den Gegenstand der Erfindung bildenden Umkehrfräse arbeiten die Fräsmesser entgegengesetzt zur Fahrtrichtung. Bei einer solchen Umkehrfräse wird die gesamte Bodenmasse über die Fräswalze gefördert, und es wird an einem Trennsieb krümelige Erde von Steinen und Kluten abgesondert. Die groben Bestandteile, die nicht durch das Sieb hindurchtreten, fallen davor in die Fräsmulde. Krümelige Erde und kleine Steine, die durch den Rechen geworfen werden, werden durch eine vom Sieb beabstandete Rückwand nach unten geleitet und überdecken danach die groben Bestandteile. Auch größere Steine, die nicht das Sieb durchlaufen haben, fallen in die von der Fräse ausgehobene Mulde und werden durch das nachfolgende Planierschild und die Planierwalze überdeckt und eingegraben, weshalb die Umkehrfräse gelegentlich auch als "Steinevergrabfräse" bezeichnet wird.

Eine Umkehrfräse kann generell für fast alle Bodenbearbeitungen eingesetzt werden und ist heute im Bereich der handgeführten landwirtschaftlichen Bodenbearbeitung eines der wichtigsten Arbeitsgeräte zum Umschichten des Bodens zur Saatvorbereitung. Die Umkehrfräse liefert bereits nach einem Arbeitsgang ein optimal vorbereitetes Saatbeet.

Die vorliegende Erfindung betrifft eine derartige Umkehrfräse, insbesondere als Anbaugerätt an einem selbstfahrenden Einachsschlepper, die in Fahrtrichtung hintereinander ein Fräsgehäuse mit einer entgegen der Fahrtrichtung rotierenden mit Fräsmessern ausgerüsteten Fräswalze, eine das Fräsgehäuse nach hinten abschließende Siebgitteranordnung und dahinter eine Planierwalze aufweist, wobei durch ein Verstellgetriebe der Bodenabstand des Fräsgehäuses und damit die Eindringtiefe der Fräsmesser einstellbar ist.

Bei derartigen Umkehrfräsen wird durch das Verstellgetriebe nicht nur die Tiefe der in den Boden eingreifenden Fräsmesser eingestellt, sondern das Verstellgetriebe muss auch dazu benutzt werden, die Fräswalze von der Arbeitsstellung in die Transportstellung und umgekehrt zu überführen. In Transportstellung liegen die Fräsmesser, wenn das Gerät auf einer Straße oder dergleichen transportiert wird, in einem ausreichenden Abstand zur Bodenfläche. In Arbeitsstellung müssen die Fräsmesser tief in den Boden eingreifen. Das Verstellgetriebe ist bei den üblichen Umkehrfräsen als Spindelgetriebe ausgebildet, das manuell über eine Kurbel oder einen Elektromotor betätigt wird. Diese Antriebsart ermöglicht zwar eine äußerst feinfühlige Höheneinstellung für die Bodenbearbeitung, sie erfordert jedoch einen erheblichen Arbeits- und Zeitaufwand, um die Fräsmesser zum Zwecke des Transports vom Boden abzuheben und wieder in die Arbeitsstellung zurückzuführen. Dies ist besonders nachteilig, weil im Betrieb oft ein häufiger Wechsel von Arbeits- und Transportstellung erforderlich ist.

Der Erfindung liegt daher die Aufgabe zugrunde, eine Umkehrfräse zu schafffen, bei der unter Beibehaltung der feinfühligen Einstellung des Verstellgetriebes ein schneller Wechsel zwischen Arbeits- und Transportstellung bei geringem Arbeitsaufwand möglich wird.

Gelöst wird die gestellte Aufgabe durch die im Kennzeichnungsteil des Patentanspruchs 1 angegebenen Merkmale.

Der Schnellbetätigungsmechanismus besteht nach der Erfindung vorzugsweise aus einem schwenkbar angeordneten Schaltmechanismus, der über einen Schalthebel an dem bestehenden Verstellgetriebe angreift und dieses über den erforderlichen Stellbereich verschiebt. Ein besonderer Vorteil dieser Stellvorrichtung besteht darin, dass sie auf einfache Weise nachträglich an bestehenden Umkehrfräsen angebaut werden kann, ohne dass die Grundkonzeption des Gerätes verändert werden müsste. Für die Erfindung sollen jedoch auch andere Schnellbetätigungsmechanismen vorbehalten bleiben, beispielsweise pneumatische oder hydraulische Stelleinrichtungen, falls pneumatische oder hydraulische Druckmedien zur Verfügung stehen.

Bei derartigen Umkehrfräsen besteht außerdem das Problem, die Fräsmesser und die Fräswalze während des Arbeitsganges von Steinen oder Bodenteilen freizuhalten, um die Arbeitsweise der Fräsmesser nicht zu behindern. Bei feuchten Bodenverhältnissen und einem hohen Anteil an Steinen setzt sich die Umkehrfräse leicht zu, und die Steine verklemmen sich in den Fräsmessern, wodurch der Antrieb blockiert werden kann. Ein Weiterarbeiten ist dann nur möglich, wenn die Fräse freigelegt und gereinigt wird. Da die Fräswalze und die Fräsmesser nur von unten her zugänglich sind, d.h. von einer Stelle, die vom Gehäuse frei ist, muss zu einer Reinigung das Gerät angehoben oder vollständig auf den Rücken umgelegt werden. Dies ist nur mit einem hohen Kraftaufwand möglich, wobei das Anbaugerät auch noch abgekuppelt werden muss, was nicht nur einen hohen Arbeitsaufwand, sondern auch einen hohen Zeitverlust bedingt.

Damit die Umkehrfräse in ihrer auf dem Boden befindlichen Arbeitsstellung oder Transportstellung einer Reinigung unterworfen werden kann sind Mittel gemäß Anspruch 8 vorgesehen.

Die Mittel, durch die die aus Trennsieb und Rückwand bestehende Siebgitteranordnung in die Freigabestellung überführt werden kann, besteht nach einer bevorzugten Aussführungsform aus einem Schwenkgelenk für die Siebgitteranordnung, wobei die Schwenkachse in der Oberkante der Siebgitteranordnung liegt, so dass diese nach oben ausgeklappt werden kann und die Fräsmesser von oben/hinten frei zugänglich werden. In Arbeitsstellung wird die Siebgitteranordnung formschlüssig verriegelt.

Voraussetzung für die Ausschwenkbewegung der Siebgitteranordnung ist ein Freiraum über dem Fräsgehäuse, in den die Siebgitteranordnung eingeschwenkt werden kann. Üblicherweise ist über dem Fräsgehäuse ein Verstellgetriebe in Gestalt einer Verstellspindel angeordnet, die auf einen Träger der Planierwalze einwirkt. Gemäß der Erfindung ist die Verbindung zwischen dem Verstellgetriebe und der Planierträgervorrichtung lösbar gestaltet, und die Verstellspindel kann abgeklappt werden, um den erforderlichen Freiraum zu schaffen.

Nachstehend wird ein Ausführungsbeispiel der Erfindung anhand der Zeichnung beschrieben. In der Zeichnung zeigen:
Figur 1 zeigt eine teilweise aufgebrochene Seitenansicht einer erfindungsgemäß ausgebildeten Umkehrfräse in Arbeitsstellung;
Figur 2 ist eine perspektivische Ansicht der in Figur 1 dargestellten Umkehrfräse;
Figur 3 ist eine der Figur 2 entsprechende perspektivische Darstellung der Umkehrfräse mit zur Reinigung aufgeklappter Siebgitteranordnung;
Figur 4 zeigt eine Einzelheit der Schwenkverriegelung der Siebgitteranordnung;
Figur 5 ist eine der Figur 1 entsprechende Seitenansicht der Umkehrfräse in Transportstellung mit angehobenem Fräsgehäuse und hierdurch über den Boden angehobenen Fräsmessern.

Die in der Zeichnung dargestellte Umkehrfräse weist ein Fräsgehäuse 1 auf, in dem eine Fräswalze 12 entgegen der Fahrtrichtung rotierend angeordnet ist, deren Fräsmesser 2 in ihrer Eingriffstiefe verstellbar in den Boden eingreifen. Die Fräswalze 12 wird über eine Rollenkette 11 von einer Antriebswelle 13 angetrieben, die mit der Zapfwelle eines Traktors oder eines selbstfahrenden Einachsschleppers kuppelbar ist. Die Verbindung der als Anbaugerät ausgebildeten Umkehrfräse mit dem Schlepper erfolgt über eine Flanschverbindung, die zur Erleichterung des Ankuppelns mit Fanghaken 9 ausgerüstet ist, die in entsprechende Fangbolzen des Schleppers eingreifen. Zur Erleichterung des An- und Abkuppelns der Umkehrfräse dient ein verstellbarer Stützfuß 10.

In Fahrtrichtung hinter der Fräswalze 12 ist eine das Fräsgehäuse 1 nach hinten abschließende Siebgitteranordnung, bestehend aus einem Siebgitter 8 und einer im Abstand dahinter liegenden Rückwand 27, angeordnet. Grobe Bodenbestandteile (Steine und Grasnabe) werden durch das Siebgitter 8 ausgesiebt und fallen vor dem Siebgitter in die Fräsmulde. Feinere Bodenbestandteile werden durch das Siebgitter 8 hindurch geworfen und an der Rückwand 27 nach unten geleitet, wo sie die in der Fräsmulde liegenden Grobteile mit feinem Boden bedecken. Im Hinterteil des Gehäuses 1 ist ein nach hinten vorstehender Arm 15 um eine Achse 23 schwenkbar gelagert, wobei ein Rastriegel 22 am inneren Ende des Armes 15 in einem Kreisbogenschlitz 29 des Gehäuses 1 läuft und in diesem in jeder Schwenkstellung festlegbar ist. Der Arm 15 trägt ein Planierschild 4, das grobe Unebenheiten beseitigt. Der Arm 15 ist mit der Walzenhalterung und einem Träger 14 für eine Planierwalze 5 verbunden. Durch die Schwenkbewegung des Armes 15 kann das Fräsgehäuse 1 mit der Fräswalze 12 in der Höhe verstellt werden. Die Planierwalze 5 presst das bearbeitete Bodenmaterial an und dient der Rückverfestigung des Bodens. Ein Abstreifer 7 befreit die Planierwalze von anhaftendem Erdgut. Durch einen Seitenverstellhebel 6 kann die Planierwalze 5 für eine optimale Ausnutzung des Bodens seitlich verstellt werden.

Die Höheneinstellung des Gehäuses 1 und damit die Eindringtiefe der Fräsmesser 2 erfolgt über eine Verstellspindel 3, die auch elektromotorisch angetrieben sein kann. Ihr unteres Ende ist über einen manuell ausziehbaren Klappstecker 26 mit dem oberen Ende des Trägerarms 14 gelenkig verbunden. Beim Ausfahren der Verstellspindel 3 wird der Arm 15 um die Schwenkachse 23 verschwenkt, wobei der Rastriegel 22 frei in dem Kreisbogenschlitz 29 laufen kann. Die Verstellspindel 3 wird im oberen Teil über einen weiter unten beschriebenen Mechanismus getragen.

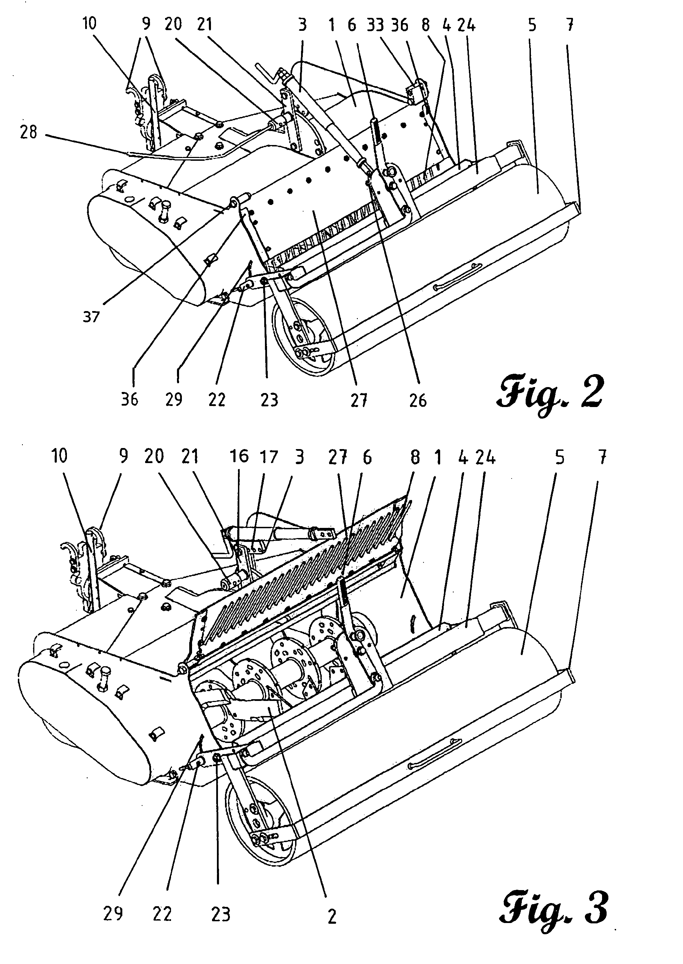

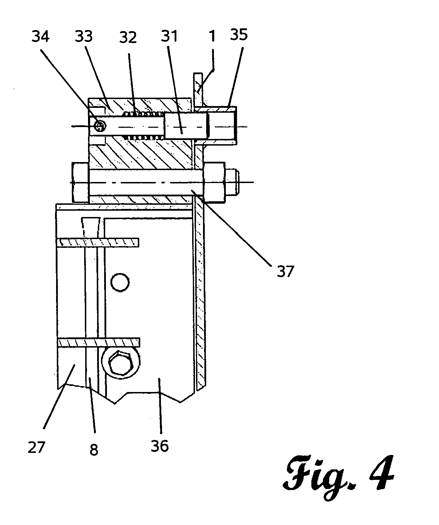

Um die Möglichkeit zu schaffen, die Fräswalze 12 und deren Fräsmesser 2 von anhaftenden Bodenresten oder eingeklemmten Fremdkörpern zu befreien, ist das Siebgitter 8 zusammen mit der Rückwand 27 im oberen Teil um eine horizontale Querachse 37 aus der in Figur 2 dargestellten Stellung in die aus Figur 3 ersichtliche Freigabestellung nach oben ausschwenkbar. Bevor die Ausschwenkung erfolgen kann, muss die Verstellspindel 3 aus dem Schwenkbereich der Siebgitteranordnung entfernt werden. Dazu wird der Klappstecker 26 von der Walzenhalterung 24 entnommen. Vor der Entkupplung muss jedoch auch noch die Planierwalze 5 in ihrer Höhenposition gesichert werden, und dies erfolgt durch Drehung, d.h. Fixierung des Rastriegels 22 in der jeweiligen Stellung innerhalb des Kreisbogenschlitzes 29. Nachdem die Verstellspindel 3 aus dem Schwenkbereich der Siebgitteranordnung entfernt ist (Figur 3), wird die Siebverriegelung (Figur 4) gelöst. Zu diesem Zweck wird ein innerhalb der Sieblagerung 33 und einer Aufnahmehülse 35 verschiebbarer Arretierbolzen 31 mittels eines geeigneten Werkzeuges, beispielsweise mittels eines Bolzens, zurückgedrückt bis der Bolzenkopf hinter der Gehäusewand 1 zu liegen kommt, so dass die Formschlussverriegelung aufgehoben wird. Dann kann die Siebgitteranordnung 8 mit der Rückwand 27 um die Achse 37 gegenüber der Sieblagerung 33 in die Freigabestellung verschwenkt werden. Der Arretierbolzen 31 gleitet dabei an der Außenwand des Fräsgehäuses 1 entlang und rastet nicht mehr ein, während die Siebgitteranordnung 8, 27 hochgeklappt ist. Ein Anschlag begrenzt den Schwenkwinkel beim Hochklappen des Siebes, damit dieses nicht selbsthaltend in ausgeklappter Stellung verbleibt. Das Siebgitter 8 wird aus Sicherheitsgründen von Hand gehalten und fällt nach Loslassen wieder automatisch in seine Arbeitsstellung (Figur 2) zurück, in der der Arretierbolzen 31 dann automatisch wieder in der Aufnahmehülse 35 im Fräsgehäuse 1 einrastet und die Siebgitteranordnung verriegelt. Damit der Arretierbolzen 31 durch die Feder nicht aus der Hülse 35 herausfällt, ist er mit einem Quersplint 34 gesichert.

Die Rückwand 27 des Siebgitters 8 ist an den Außenkanten ausgespart und mit Gummilappen 36 versehen, um einen bündigen Abschluss mit dem Gehäuse zu erreichen. Dadurch werden beim Herunterklappen der Siebgitteranordnung 8, 27 Verletzungen durch Scher- oder Quetschstellen zwischen dem Gehäuse 1 und der Rückwand 27 vermieden.

Nach dem Zurückklappen der Siebgitteranordnung 8, 27 wird die Verstellspindel 3 wieder durch den Klappstecker 26 mit dem Träger 14 bzw. der Halterung 24 verbunden, und der Rastriegel 22 wird entsperrt, so dass der Arm 15 wieder frei um die Achse 23 schwenken kann und über die Verstellspindel 3 die Planierwalze 5 stufenlos in der Höhe einstellbar wird.

Die Verbindung der Verstellspindel 3 mit dem Fräsgehäuse 1 erfolgt über einen Schalthebel 21, der um eine Achse 25 schwenkbar gegenüber dem Gehäuse ist. Das Ende des Schalthebels 21 ist über einen Bolzen 16 schwenkbar mit einem von der Spindel vorstehenden Flansch 17 verbunden. Zur Veränderung der Grundeinstellung trägt dieser Flansch 17 mehrere Bolzenlöcher für den Verbindungsbolzen 16.

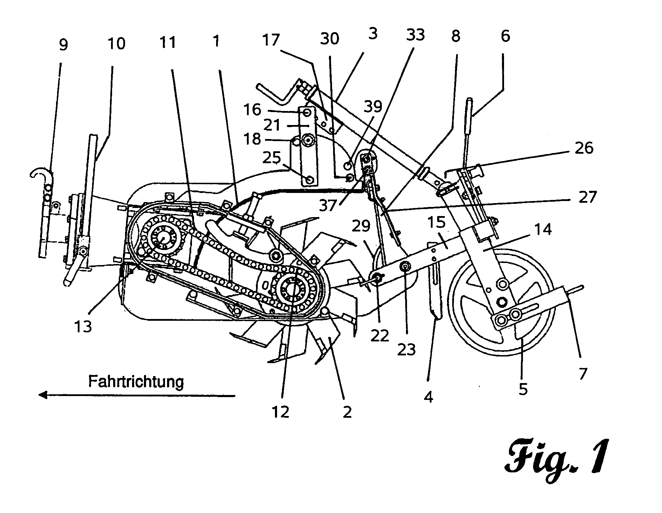

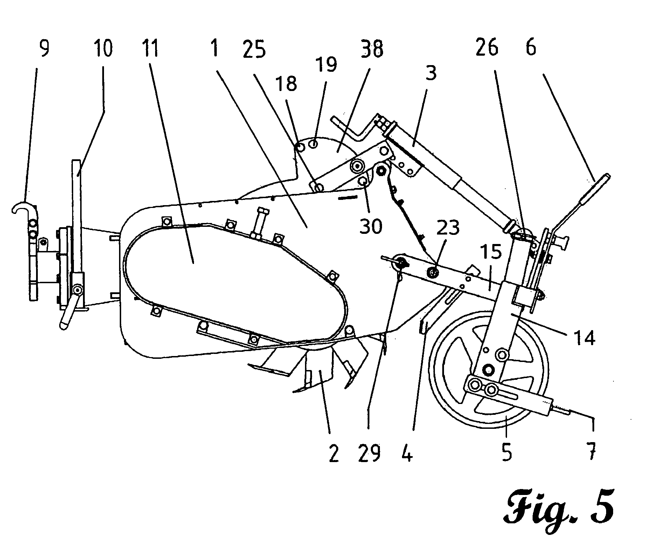

Durch Verschwenkung des Schalthebels 21 um die Achse 25 kann die Verstellspindel 3 zwischen den beiden Extremstellungen verschwenkt werden, die in den Figuren 1 bzw. 5 dargestellt sind. In Figur 1 liegt der Schalthebel 21 einem Anschlag 18 an, und in der anderen Extremstellung liegt er einem Anschlag 30 an. In der jeweiligen Endstellung fixiert ein Arretierbolzen 20 die Stellung des Schalthebels 21. In Arbeitsstellung greift der Arretierbolzen 20 in ein Loch 19 der Führungskulisse 38 ein, und in der Transportstellung gemäß Figur 5 steht er in ein Loch 39 der Führungskulisse 38 ein.
Diese Schwenkhebelanordnung bildet einen Schnellbetätigungsmechanismus, mit dem die Arbeitsweise der Verstellspindel 3 überbrückt wird, d.h. durch Verschwenkung des Schalthebels 21 erfolgt unter Umgehung der Verstellspindel 3 eine sofortige Höhenveränderung der Fräswalze 12, um das Gerät von der Arbeitsstellung gemäß Figur 1 ohne Betätigung der Spindel 3 schnell in die Transportstellung gemäß Figur 5 zu überführen, in der die Fräsmesser 2 vom Boden abgehoben sind. In gleicher Weise erfolgt durch Rückschwenkung des Schalthebels 21 in die Stellung gemäß Figur 1 ein beschleunigter Übergang in die Arbeitsstellung.

Zur Fernbetätigung der Schalthebelverriegelung ist der Arretierbolzen 20 mit einem Bowdenzug 28 verbunden, der beispielsweise vom Schlepper aus über einen am Lenker des Schleppers angeordneten Handhebel betätigt werden kann. Der Arretierbolzen 20 wird dazu über den Bowdenzug 28 aus seinem Verriegelungsloch 19 ausgehoben, so dass der Schalthebel 21 von der oberen Endstellung gemäß Figur 1 in die untere Endstellung (Transportstellung) bewegt werden kann. Um die Umkehrfräse in die Transportstellung gemäß Figur 5 zu überführen, wird die Fräse über den Einachsschlepper ausgehoben, damit die Planierwalze 5 nach Lösen des Arretierbolzens nach unten fällt, bis der Arretierbolzen 20 wieder in der unteren Stellung im Loch 39 einrastet. Zur Überführung in die Arbeitsstellung gemäß Figur 1 braucht lediglich der Arretierbolzen 20 gelöst zu werden, wodurch die Planierwalze 5 selbstständig nach oben schwenkt und der Schalthebel 21 wieder in seiner oberen Stellung gemäß Figur 1 verrasten kann. Durch Schwenken der Verstellspindel um diese beiden Arbeitspunkte kann schnell zwischen Arbeits- und Transportstellung gewechselt werden, und eine Feineinstellung der Arbeitshöhe kann über die Verstellspindel 3 reguliert werden, die manuell oder über einen elektrischen Verstellmotor antreibbar ist.

### Bezugszeichenliste

- 1: Fräsgehäuse
- 2: Fräsmesser
- 3: Verstellspindel
- 4: Planierschild
- 5: Planierwalze
- 6: Seitenverstellhebel
- 7: Abstreifer
- 8: Siebgitter
- 9: Fanghaken
- 10: Stützfuß
- 11: Rollenkette
- 12: Fräswalze
- 13: Antriebswelle
- 14: Träger
- 15: Arm
- 16: Bolzen
- 17: Flansch
- 18: Anschlag
- 19: Loch
- 20: Arretierbolzen
- 21: Schalthebel
- 22: Rastriegel
- 23: Schwenkachse
- 24: Walzenhalterung
- 25: Achse
- 26: Klappstecker
- 27: Rückwand
- 28: Bowdenzug
- 29: Kreisbogenschlitz
- 30: Anschlag
- 31: Arretierbolzen
- 32: Feder
- 33: Sieblagerung
- 34: Quersplint
- 35: Aufnahmehülse
- 36: Gummilappen
- 37: Querachse
- **38**: Führungskulisse
- 39: Loch

## Patentansprüche

1. Umkehrfräse, insbesondere als Anbaugerät an einem selbstfahrenden Einachsschlepper, die in Fahrtrichtung hintereinander ein Fräsgehäuse (1) mit einer entgegen der Fahrtrichtung rotierenden mit Fräsmessern ausgerüsteten Fräswalze (12), eine das Fräsgehäuse (1) nach hinten abschließende Siebgitteranordnung (8, 27) und dahinter eine Planierwalze aufweist, wobei durch ein Verstellgetriebe (3) der Bodenabstand des Fräsgehäuses (1) und damit die Eindringtiefe der Fräsmesser (2) einstellbar ist,
**dadurch gekennzeichnet, dass** das Verstellgetriebe (3) durch einen wahlweise betätigbaren Schnellschaltmechanismus (21, 17) überbrückbar ist.

2. Umkehrfräse nach Anspuch 1,
**dadurch gekennzeichnet, dass** der Schnellschaltmechanismus ein Stellglied (21) aufweist, über das das Verstellgetriebe seinerseits im Sinne einer Höhenverstellung verschiebbar ist und dass das Stellglied als Schalthebel (21) ausgebildet ist, der einerseits am Fräsgehäuse (1) und andererseits am Verstellgetriebe (3) angelenkt ist.

3. Umkehrfräse nach Anspruch 2,
**dadurch gekennzeichnet, dass** der Schalthebel in seinen beiden Endstellungen durch einen Arretierbolzen (20) verriegelbar ist, der in Löcher (19 bzw. 39) in der Arbeitsstellung bzw. der Transportstellung verriegelbar ist.

4. Umkehrfräse nach einem der vorhergehenden Ansprüche,
**dadurch gekennzeichnet, dass** ein an einem Planierwalzenträger (14) angreifender am Fräsgehäuse (1) über eine Achse (23) angelenkter Arm (15) mit einem einschaltbaren Rastriegel (22) in einem Kreisbogenschlitz (29) des Gehäuses geführt ist.

5. Umkehrfräse nach Anspruch 1,
**dadurch gekennzeichnet, dass** Mittel vorgesehen sind, um ohne Lageänderung des Gerätes die Siebgitteranordnung (8, 27) aus ihrer Arbeitsstellung in eine Freigabestellung zu überführen, in der die Fräswalze (12) mit ihren Fräsmessern (2) frei zugänglich ist und dass die Mittel ein Klappgelenk aufweisen, über das die Siebgitteranordnung (8,27) nach oben ausschwenkbar ist.

6. Umkehrfräse nach Anspruch 5,
**dadurch gekennzeichnet, dass** die Achse (37) des Klappgelenkes entlang der Oberkante der Siebgitteranordnung verläuft.

7. Umkehrfräse nach einem der Ansprüche 5 und 6,
**dadurch gekennzeichnet, dass** das Verstellgetriebe eine Verstellspindel (3) aufweist, die über ein Gelenk mit Klappstecker (26) an einem Walzenträger angelenkt ist, der seinerseits am Maschinenrahmen über ein Drehgelenk (23) auslenkbar ist, das zur Freigabe der Spindel auftrennbar ist.

8. Umkehrfräse, insbesondere als Anbaugerät an einem selbstfahrenden Einachsschlepper, die in Fahrtrichtung hintereinander ein Fräsgehäuse (1) mit einer entgegen der Fahrtrichtung rotierenden mit Fräsmessern ausgerüsteten Fräswalze (12), eine das Fräsgehäuse (1) nach hinten abschließende Siebgitteranordnung (8, 27) und dahinter eine Planierwalze aufweist, wobei durch ein Verstellgetriebe (3) der Bodenabstand des Fräsgehäuses (1) und damit die Eindringtiefe der Fräsmesser (2) einstellbar ist,
**dadurch gekennzeichnet, dass** Mittel vorgesehen sind, um ohne Lageänderung des Gerätes die Siebgitteranordnung (8, 27) aus ihrer Arbeitsstellung in eine Freigabestellung zu überführen, in der die Fräswalze (12) mit ihren Fräsmessern (2) frei zugänglich ist.

9. Umkehrfräse nach Anspruch 8,
**dadurch gekennzeichnet, dass** die Mittel ein Klappgelenk aufweisen, über das die aus Siebgitter (8) und Rückwand (27) bestehende Siebgitteranordnung nach oben ausschwenkbar ist und dass die Achse (37) des Klappgelenkes entlang der Oberkante der Siebgitteranordnung verläuft.

10. Umkehrfräse nach einem der Ansprüche 8 und 9,
**dadurch gekennzeichnet, dass** ein im Schwenkbereich der Siebgitteranordnung (8, 27) liegendes Verstellgetriebe (3) aus dem Schwenkbereich der Siebgitteranordnung ausrückbar ist und dass das Verstellgetriebe über ein Gelenk mit Klappstecker (26) an einem Träger der Planierwalze angelenkt ist und das Gelenk zwecks Freigabe des Verstellgetriebes auftrennbar ist.

11. Umkehrfräse nach einem der Ansprüche 8 bis 10,
**dadurch gekennzeichnet, dass** die Siebgitteranordnung durch eine Formschlussverriegelung (31,35) in Arbeitsstellung verriegelbar ist und dass ein in einer Bohrung der Sieblagerung (33) federnd abgestützter Arretierbolzen (31) in Arretierbolzen (31) in Arretierstellung in eine Ausnehmung des Fräsgehäuses (1) formschlüssig eingreift, wobei das Fräsgehäuse (1) eine Bolzenaufnahmehülse (35) aufweist, in der der Bolzen (31) in Verriegelungsstellung vertieft ruht.
